# EUROPÄISCHE PATENTSCHRIFT

(11) **EP 0 302 194 B1**
(45) Veröffentlichungstag und Bekanntmachung des Hinweises auf die Patenterteilung: **17.11.1994**
(21) Anmeldenummer: 88108744.9
(22) Anmeldetag: 01.06.1988
(51) Int. Cl.: G01D 5/244

(54) **Positionsmesseinrichtung mit mehreren Abtaststellen**
Position-measuring device with plural probe placings
Dispositif de mesure de position avec plusieurs points de capteur

(30) Priorität: 07.08.1987 DE 3726260
(43) Veröffentlichungstag der Anmeldung: 08.02.1989
(73) Patentinhaber: Dr. Johannes Heidenhain GmbH, D-83292 Traunreut (DE)
(72) Erfinder: Ernst, Alfons, Dipl.-Ing., D-8225 Traunreut (DE); Schmitt, Walter, Dipl.-Ing. (FH), D-8225 Traunreut (DE); Huber, Norbert, Dipl.-Ing., D-8225 Traunreut (DE)

(56) Entgegenhaltungen:
- EP-A- 0 121 652
- DE-A- 2 818 742
- DE-A- 3 901 546

## Beschreibung

Die Erfindung bezieht sich auf eine Positionsmeßeinrichtung nach dem Oberbegriff des Patentanspruches 1.

Bei Positionsmeßeinrichtungen können die Meßergebnisse verbessert werden, wenn die Maßverkörperung mit mehreren Abtasteinrichtungen an mehreren Abtaststellen abgetastet wird.

Bekannt sind derartige Positionsmeßeinrichtungen z.B. aus der US-A-4,580,046 und der US-A-4,580,047. Dort wird mit Hilfe von getakteten Prüfschaltungen die Bewegungsgeschwindigkeit der zu messenden Bauteile und die Phasenlage der Meßsignale überwacht, wobei jeweils Drehgeber doppelt abgetastet werden.

Aus der DE-A-35 27 128 ist eine Drehzahl-Meßanordnung bekannt, bei der die Amplituden der Meßsignale konstant gehalten werden sollen. Der dort beschriebene Drehgeber besitzt zwei um 180° räumlich versetzte Signalerzeuger in Form von Lichtschranken, die je zwei um 90° gegeneinander versetzte Sinusspannungen erzeugen, aus denen durch Mittelung der Drehwinkel bestimmt wird.

Ferner ist aus der DE-A-27 11 593 ein Drehzahlmesser bekannt, bei dem ein Unterbrecherrad von zwei räumlich um 180° zueinander versetzten Lichtschranken abgetastet wird. Auch dort werden die Ausgangssignale zusammengefaßt und gemittelt.

Mit dieser sogenannten Doppelabtastung können Exzentrizitätsfehler und mechanische Teilungsfehler vermindert werden. Dabei können Phasenverschiebungen zwischen den von den beiden Abtaststellen gelieferten Abtastsignalen bis zu einem gewissen Grad toleriert werden. Wird jedoch ein Grenzwert überschritten, so besteht die Gefahr, daß die resultierenden Signale zu klein werden oder sich gegenseitig ganz auslöschen. Anhand einer vektoriellen Darstellung der Abtastspannungen soll dies später noch erläutert werden.

Die Gefahr der Grenzwertüberschreitung besteht insbesondere bei großen Beschleunigungen durch Stöße oder starke Vibration. In diesem Fall ist die Doppelabtastung - die ja im Normalbetrieb zur Erhöhung der Meßgenauigkeit dient - von Nachteil, da die Signale einer Abtaststelle die Signale der anderen Abtaststelle ganz oder zumindest teilweise auslöschen, was zu Fehlzählungen führen kann.

Über den vorbeschriebenen Stand der Technik hinaus ist es aus der EP-A- 0 121 652 bekannt, einzelne Abtastsignal-Parameter wie Symmetrie, Amplitude und Phasenwinkel unterschiedlich zu gewichten.

Der Erfindung liegt die Aufgabe zugrunde, eine Positionsmeßeinrichtung mit Mehrfachabtastung zu schaffen, bei der es nicht zu Fehlzählungen bei Erschütterungen oder dergleichen kommen kann.

Diese Aufgabe wird durch eine Positionsmeßeinrichtung mit den Merkmalen des Patentanspruches 1 gelöst.

Die Vorteile der erfindungsgemäßen Positionsmeßeinrichtung liegen darin, daß sie im Normalbetrieb die positiven Auswirkungen der Mehrfachabtastung nutzt, die sich in exakteren Messungen ausdrücken, ohne daß die Nachteile der Mehrfachabtastung bei großen Beschleunigungen durch Stöße oder Vibrationen in Kauf genommen werden müssen.

Die Erfindung wird nachstehend mit Hilfe von Ausführungsbeispielen anhand der Zeichnungen noch näher erläutert.

Es zeigt
- Figur 1: ein Blockschaltbild einer Positionsmeßeinrichtung mit zwei Abtasteinrichtungen;
- Figur 2: a) eine Schaltung zur Differenzsignalbildung bei zwei Abtasteinrichtungen;
b) eine Schaltung zur Differenzsignalbildung bei vier Abtasteinrichtungen;
- Figur 3: a) eine Schaltung zur Betragsbildung bei zwei Abtasteinrichtungen;
b) eine Schaltung zur Betragsbildung bei vier Abtasteinrichtungen;
- Figur 4: a) eine Schaltung für Summierglieder mit variabler Signalwichtung bei zwei Abtasteinrichtungen;

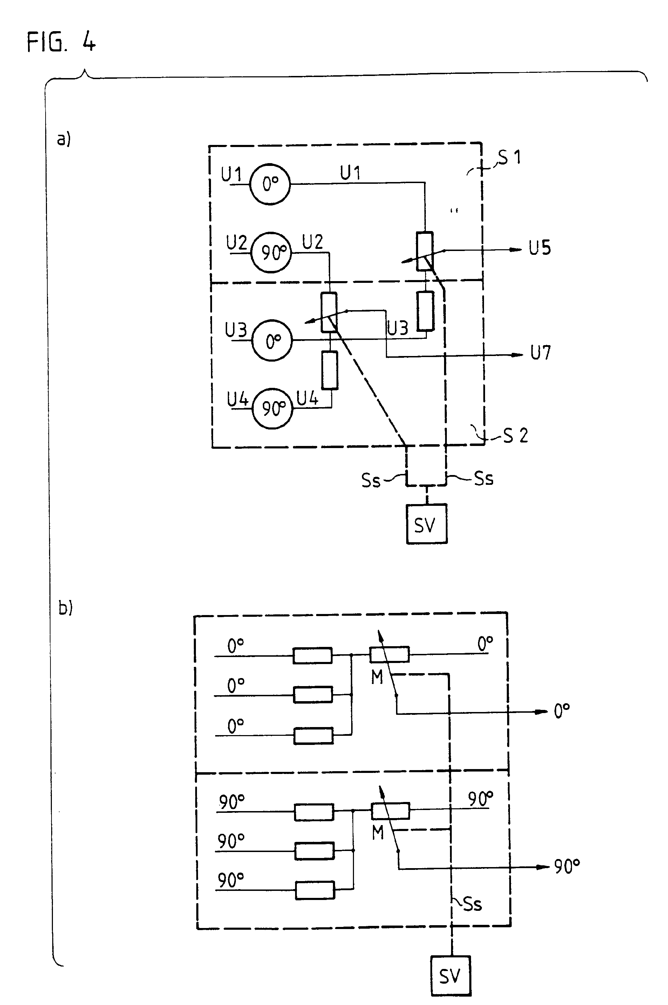

- Figur 4: b) eine Schaltung für Summierglieder mit variabler Signalwichtung bei vier Abtasteinrichtungen;

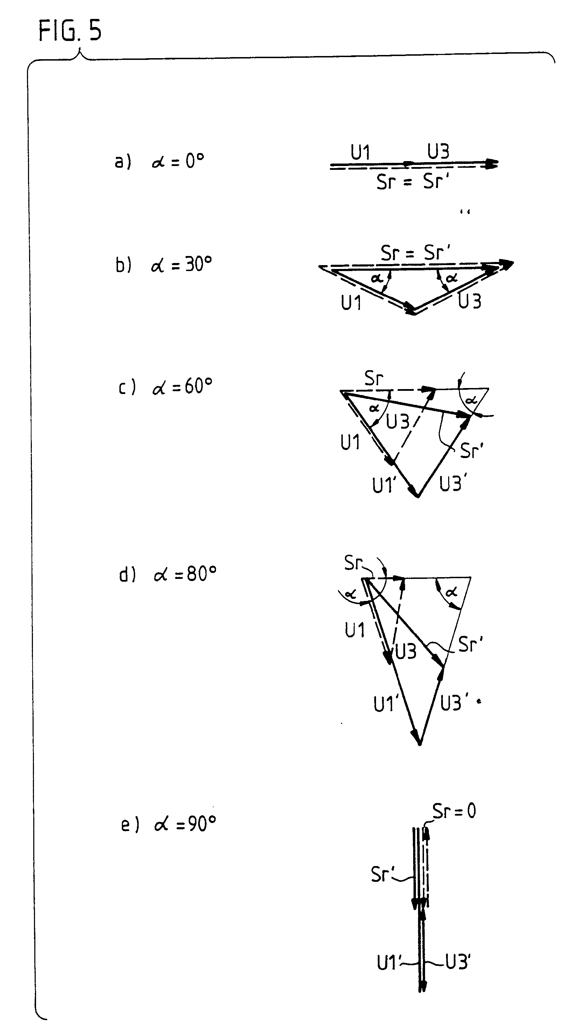

- Figur 5: a) - e) verschiedene Phasendiagramme.

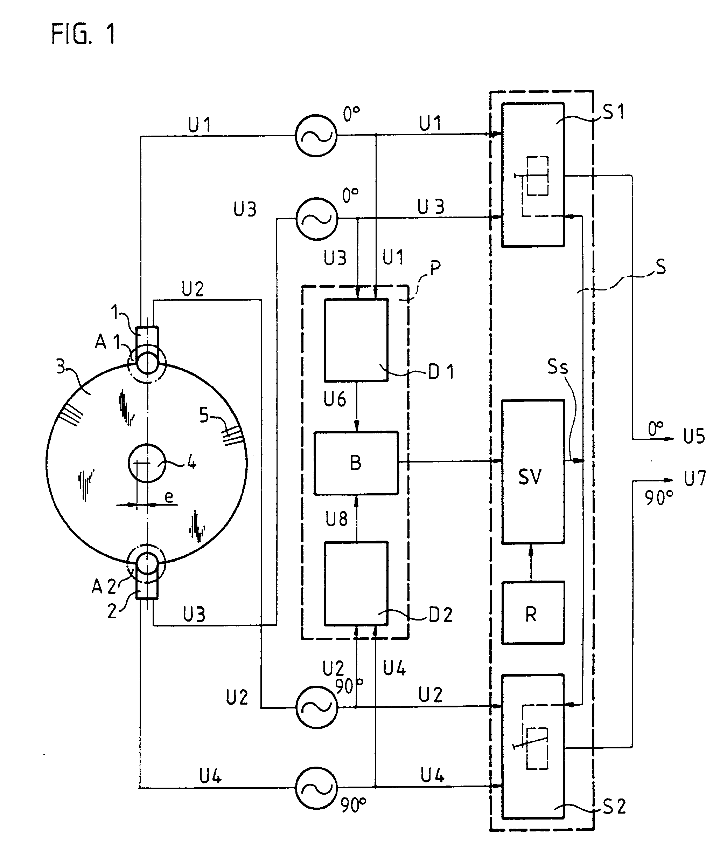

Das in Figur 1 dargestellte Blockschaltbild zeigt zwei Abtasteinrichtungen 1 und 2, die eine Teilscheibe 3 eines nicht näher dargestellten Drehgebers abtasten. Die Teilscheibe 3 ist auf einer Welle 4 befestigt. Teilscheibe 3 und Welle 4 weisen zueinander eine gewisse Exzentrizität "e" auf. Die Teilscheibe 3 weist eine inkrementale Teilung 5 auf, durch die mittels der Abtasteinrichtungen 1 und 2 jeweils zwei um 90° phasenverschobene Abtastsignale U1, U2 und U3, U4 erzeugt werden. Die Phasenverschiebung der Abtastsignale U1 und U2 dient in bekannter Weise zur Ermittlung der Drehrichtung der Teilscheibe 3. Da sich die Abtasteinrichtungen 1 und 2 diametral gegenüberliegen, spricht man von räumlich um 180° zueinander versetzten Abtaststellen A1 und A2.

Zur Messung des Drehwinkels der Teilscheibe 3 werden jeweils die Abtastsignale U1 und U3 sowie U2 und U4 analog addiert und dadurch gemittelt. Dadurch verringert sich im normalen Betriebsfall der Einfluß der Exzentrizität "e" auf das Meßergebnis.

Die Doppelabtastung hat jedoch auch Ihre Grenzen, wenn die Exzentrizität "e" durch Erschütterungen, starke Beschleunigungen durch Stöße oder dergleichen kurzzeitig den zulässigen Grenzwert überschreitet. Dann kann es zu Fehlzählungen kommen, da sich die Abtastsignale U1 und U3 bzw. U2 und U4 bei der analogen Addition im Extremfall sogar auslöschen.

Um die Fehlzählungsgefahr verständlich zu machen, sei hier kurz auf Figur 5 eingegangen, in der mittels Phasendiagrammen die analoge Addition bei fünf willkürlich ausgewählten verschiedenen Phasenbeziehungen zwischen den Abtastsignalen U1 und U3 der Abtasteinrichtungen 1 und 2 dargestellt sind, und bei denen die resultierenden Signale Sr gemäß dem Stand der Technik mit unterbrochenen Linien und die resultierenden Signale Sr′ gemäß der Erfindung mit durchgezogenen Linien dargestellt sind.

Figur 5a zeigt den Fall, daß keine Phasenverschiebungen zwischen den Abtastsignalen U1 und U3 der Abtasteinrichtungen 1 und 2 vorliegen. Die beiden Abtastsignale U1 und U3 addieren sich auf 2 · U1 und der Meßwert ist korrekt.

In Figur 5b beträgt die Phasenverschiebung 2α zwischen den Abtastsignalen U1 und U3 ca. 60°, so daß als resultierendes Signal Sr 60 ein Signal vom Betrag 2 · U1 cos 30° zur Verfügung steht. Diese Phasenverschiebung liegt noch im zulässigen Toleranzbereich.

Die Phasendiagramme gemäß der Figuren 5c bis 5e zeigen, wie sich das resultierende Signal Sr sukzessive verschlechtert, bis es in der Darstellung 5e zur Auslöschung kommt. In diesem Fall käme es also sicher zu einer Fehlzählung.

Um dies zu vermeiden, werden erfindungsgemäß die Abtastsignale im Störfall unterschiedlich gewichtet. Mit der Schaltung gemäß Figur 1 kann der Störfall festgestellt und die unterschiedliche Wichtung der Abtastsignale vorgenommen werden, so daß es zu den resultierenden Signalen Sr′ gemäß Figur 5 kommt.

Das 0°-Abtastsignal U1 der ersten Abtasteinrichtung 1 und das 0°-Abtastsignal U3 der zweiten Abtasteinrichtung 2 werden dazu einem Differenzbildungs-Baustein D1 zugeführt, in dem aus den beiden 0°-Abtastsignalen U1 und U3 ein Differenzsignal U6 gebildet wird.

In gleicher Weise wird in einem Differenzbildungs-Baustein D2 ein Differenzsignal U8 aus den beiden 90°-Abtastsignalen U2 und U4 gebildet, die von den Abtasteinrichtungen 1 und 2 in den Differenzbildungs-Baustein D2 eingespeist werden.

Die 0°-Abtastsignale U1 und U3 werden darüber hinaus einem Summierglied S1 und die 90°-Abtastsignale U2 und U4 einem Summierglied S2 zugeführt. Auf die Summierglieder S1 und S2 wird später noch Bezug genommen.

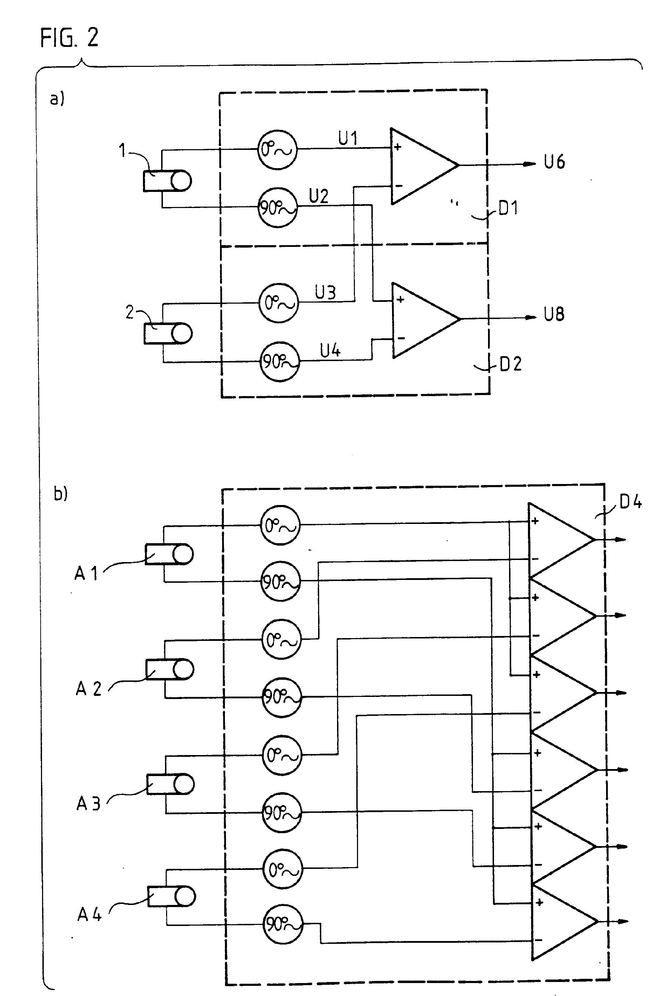

In Figur 2a sind schematisch die Differenzbildungs-Bausteine D1 und D2 dargestellt, wie sie für zwei Abtasteinrichtungen 1 und 2 erforderlich sind. Die Differenzsignale U6 und U8 sind wieder zwei um 90° phasenverschobene Signale.

In Figur 2b ist ein Differenzbildungs-Baustein D4 gezeigt, wie er bei einem nichtdargestellten Drehgeber mit beispielsweise vier Abtaststellen A1 bis A4 erforderlich wäre. Bei mehreren Abtaststellen A1 bis A4 werden die Differenzen zwischen den Signalen der "Hauptabtaststelle" und den entsprechenden Signalen der anderen Abtaststellen gebildet. So ergeben sich z.B. bei vier Abtaststellen drei 0°- und drei 90°-Differenzsignale. Ist die Exzentrizität 0, so sind die Signaldifferenzen ebenfalls 0.

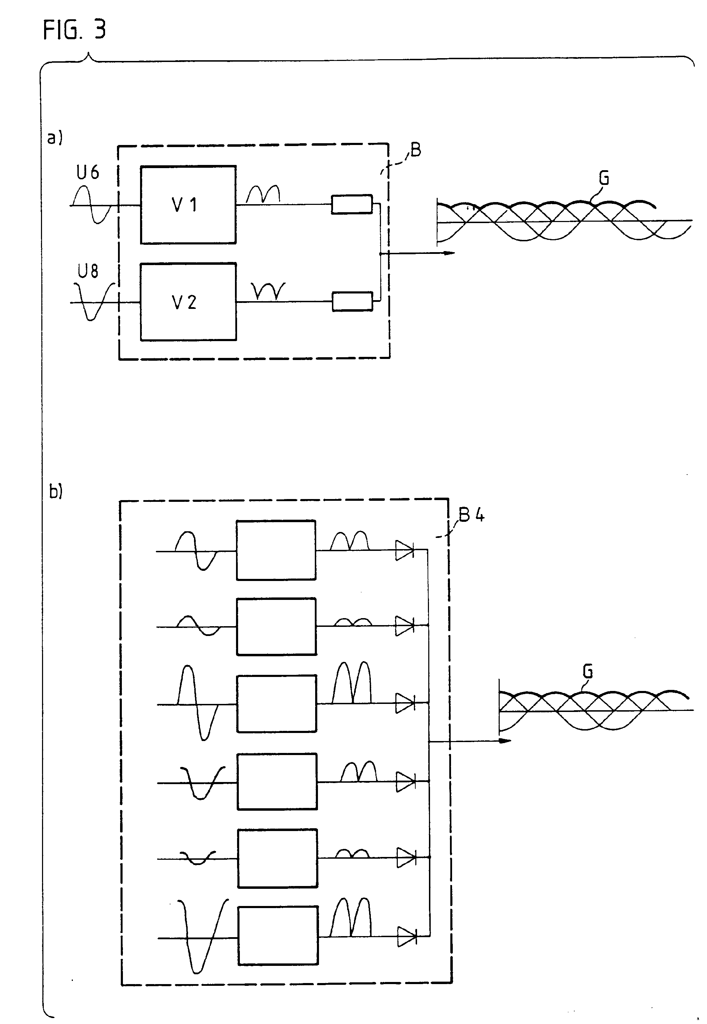

Nach der Differenzbildung in den Differenzbildungs-Bausteinen D1 und D2 werden das 0°- und das 90°-Differenzsignal U6 und U8 einem Betragsbildungs-Baustein B zugeführt. Eine Möglichkeit den Betragsbildungs-Baustein B auszugestalten besteht darin, dessen Schaltung mit Vollweggleichrichtern V1 und V2 zu versehen, um die Differenzsignale vollweggleichzurichten. Ein derartig aufgebauter Betragsbildungs-Baustein B ist in Figur 3a für einen Drehgeber mit zwei Abtaststellen dargestellt. Die Vollweggleichrichtung ist an sich bekannt, so daß hier nicht näher darauf eingegangen werden muß. Man erhält aus den vollweggleichgerichteten Differenzsignalen U6 und U8 durch Zusammenfassung eine pulsierende Gleichspannung G, bei der die Höhe des Gleichspannungsanteiles von der Exzentrizität "e" abhängt.

Die Betragsbildung läßt sich auch durch Quadrieren und Summieren der Signale U6, U8 durchführen. Daraus ergibt sich ebenfalls ein Signal, dessen Höhe von der Exzentrizität "e" abhängt.

Figur 3b zeigt schematisch einen Betragsbildungs-Baustein B4, wie er beispielsweise für einen nicht dargestellten Drehgeber mit vier Abtaststellen erforderlich wäre.

Nachdem in dem Betragsbildungs-Baustein B eine Größe gebildet worden ist, die von der Exzentrizität "e" abhängt, wird diese Größe einem Steuerverstärker SV mit definierter Ansprechwelle zugeführt, die in Form einer Referenzspannung von einem Baustein R geliefert wird. Überschreitet die Größe aus dem Betragsbildungs-Baustein B einen bestimmten Wert, so erzeugt der Steuerverstärker SV eine Steuerspannung Ss, die den Summiergliedern S1 und S2 zugeführt wird. Der Steuerverstärker SV kann in Stufen schalten oder stetig wirken.

In den Summiergliedern S1 und S2 werden die Abtastsignale U1, U2 der ersten Abtasteinrichtung 1 und die Abtastsignale U3, U4 der zweiten Abtasteinrichtung 2 in der Weise addiert, daß sowohl für die 0°-Abtastsignale U1, U3 als auch für die 90°-Abtastsignale U2, U4 Summensignale U5 und U7 gebildet werden, die entsprechend dem Signal (Steuerspannung Ss) aus dem Steuerverstärker SV gewichtet sind.

Die unterschiedliche Wichtung der Signale, die von den Abtaststellen A1 und A2 geliefert werden, kann durch einen elektrisch steuerbaren Widerstand (z.B. FET oder Vierquadrantenmultiplizierer) erfolgen, dessen Ansteuerspannung vom Steuerverstärker SV in Form der Steuerspannung Ss geliefert wird.

Ein Summierglied S4 für einen Drehgeber mit vier Abtaststellen A1 bis A4 müßte gemäß der Darstellung in Figur 4b aufgebaut sein, wobei der Fachmann die Schaltung für die Mehrfach-Abtaststellen entsprechend seinem Fachwissen ausführen kann.

In den Summiergliedern S1, S2 werden also die Signale U1, U3 und U2, U4 der einzelnen Abtaststellen A1 und A2 analog addiert, wobei durch die Steuerspannung Ss aus dem Steuerverstärker SV bei der Addition eine Wichtung vorgenommen wird. Dabei wird der Anteil der Abtastsignale einer Abtaststelle (Hauptabtaststelle) angehoben (gleichzeitig können auch die Anteile der Signale der übrigen Abtaststellen verringert werden), so daß es nicht zu Signalauslöschungen kommen kann. Eine sichere Zählung der abgetasteten Inkremente der Teilung 5 der Teilscheibe 3 ist somit gewährleistet.

Die Erfindung kann auch bei linearen Meßeinrichtungen Anwendung finden, wenn beispielsweise Maßverkörperungen aneinandergereiht werden müssen, um die geforderte Meßlänge zu erreichen. In diesen Fällen werden auch bei Längenmeßeinrichtungen mehrere Abtasteinrichtungen vorgesehen.

Bei Code-Meßeinrichtungen ist die Erfindung einsetzbar, sofern die Spur mit der höchsten Auflösung (die feinste Spur ist eine Inkrementalspur) in der beschriebenen Weise doppelt abgetastet wird.

## Patentansprüche

1. Positionsmeßeinrichtung mit einer Maßverkörperung (5) und mehreren Abtasteinrichtungen (1,2) zur Bildung mehrerer Abtaststellen (A1,A2) für die Maßverkörperung (5), mit einer Auswerteschaltung für die durch die Abtasteinrichtungen (1,2) an den Abtaststellen (A1,A2) erzeugten, zueinander phasenverschobenen Abtastsignale (U1,U2,U3,U4), bei der mittels der Auswerteschaltung durch Zusammenfassung und Mittelung des Abtastsignale (U1,U2,U3,U4) ein Meßsignal gebildet wird und bei der die Auswerteschaltung eine Prüfschaltung zur Überprüfung der Abtastsignale (U1,U2,U3,U4) der verschiedenen Abtaststellen (A1,A2) aufweist, dadurch gekennzeichnet, daß die phasengleichen Abtastsignale (U1, U3 bzw. U2, U4) der verschiedenen Abtaststellen (A1 bzw. A2) jeweils einem Differenzbildungs-Baustein (D1 bzw. D2) zugeführt, von diesem jeweils ein Differenzsignal (U6 bzw. U8) gebildet und diese Differenzsignale (U6, U8) einem Betragsbildungs-Baustein (B) zur Betragsbildung zugeführt werden, und daß die phasengleichen Abtastsignale (U1, U3 bzw. U2, U4) Summiergliedern (S1 bzw. S3) zur Summenbildung in Form von Summensignalen (U5 bzw. U7) zugeführt werden, wobei eine ungleiche Gewichtung der Abtastsignale (U1, U2; U3, U4) erfolgt, wenn die Ausgangsgröße des Betragsbildungs-Bausteins (B) einen vorgegebenen Toleranzbereich verläßt.

2. Positionsmeßeinrichtung nach Anspruch 1, dadurch gekennzeichnet, daß die unterschiedliche Wichtung durch ein Steuerglied (S) erfolgt.

3. Positionsmeßeinrichtung nach Anspruch 2, dadurch gekennzeichnet, daß das Steuerglied (S) einen Steuerverstärker (SV) und einstellbare Summierglieder (S1, S2) aufweist.

4. Positionsmeßeinrichtung nach Anspruch 1, dadurch gekennzeichnet, daß der Betragsbildungs-Baustein (B) Vollweggleichrichter (V1, V2) aufweist.

5. Positionsmeßeinrichtung nach Anspruch 3, dadurch gekennzeichnet, daß die einstellbaren Summierglieder (S1, S2) elektrisch steuerbare Widerstände (F1, F2) aufweisen.

## Claims

1. A position measuring device with a measuring unit (5) and a plurality of sensing devices (1, 2) for forming a plurality of sensing locations (A1, A2) for the measuring unit (5), with a processing circuit for the mutually phase-displaced sensing signals (U1, U2, U3, U4) generated by the sensing devices (1, 2) at the sensing locations (A1, A2), whereby a measuring signal is formed by means of the processing circuit by combining and averaging the sensing signals (U1, U2, U3, U4), and wherein the processing circuit includes a checking circuit for checking the sensing signals (U1, U2, U3, U4) from the different sensing locations (A1, A2), characterized in that the sensing signals of like phase (U1, U3 and U2, U4) from the different sensing locations (A1, A2) are in each case applied to a difference-forming unit (D1 and D2), a difference signal (U6 and U8) being formed by each of these and these difference signals (U6, U8) being applied to a magnitude-forming unit (B) for forming the magnitude, and in that the sensing signals of like phase (U1, U3 and U2, U4) are applied to summing elements (S1 and S3) to form sums in the form of sum signals (U5 and U7), wherein unequal weighting of the sensing signals (U1, U2; U3, U4) is effected when the output value of the magnitude-forming unit (B) leaves a predetermined tolerance range.

2. A position measuring device according to claim 1, characterized in that the different weighting is effected by a control element (S).

3. A position measuring device according to claim 2, characterized in that the control element (S) comprises a control amplifier (SV) and adjustable summing elements (S1, S2).

4. A position measuring device according to claim 1, characterized in that the magnitude-forming unit (B) comprises full-wave rectifiers (V1, V2).

5. A position measuring device according to claim 3, characterized in that the adjustable summing elements (S1, S2) comprise electrically controllable resistors (F1, F2) .

## Revendications

1. Dispositif de mesure de position comportant une mesure matérialisée (5) et plusieurs dispositifs de lecture (1, 2) aux fins de former plusieurs points de lecture (A1, A2) de la mesure matérialisée (5), un circuit d'exploitation des signaux de lecture (U1, U2, U3, U4) mutuellement déphasés produits aux points de lecture (A1, A2), dans lequel un signal de mesure est formé au moyen du circuit d'exploitation par groupement et calcul de la moyenne des signaux de lecture (U1, U2, U3, U4) et dans lequel le circuit d'exploitation comporte un circuit de contrôle pour le contrôle des signaux de lecture (U1, U2, U3, U4) des différents points de lecture, caractérisé par le fait que les signaux de lecture (U1, U3 et U2, U4) de même phase des différents points de lecture (A1 et A2) sont envoyés respectivement à un module différenciateur (D1 et D2), que celui-ci forme un signal différentiel (U6 et U8) et que les signaux différentiels (U6, U8) sont transmis à un module de calcul de valeur (B) aux fins de calculer la valeur et par le fait que les signaux de lecture (U1, U3 et U2, U4) de même phase sont envoyés à des éléments additionneurs (S1 et S3) aux fins de calculer la somme sous la forme de signaux de somme (U5 et U7), les signaux de lecture (U1, U2, U3, U4) recevant une pondération différente lorsque la grandeur de départ du module de calcul de valeur (B) quitte une plage de tolérance prédéterminée.

2. Dispositif de mesure selon la revendication 1, caractérisé par le fait que la pondération variable est affectée par un élément de commande (S).

3. Dispositif de mesure selon la revendication 2, caractérisé par le fait que l'élément de commande (S) comporte un amplificateur de commande (SV) et des éléments additionneurs (S1, S2) réglables.

4. Dispositif de mesure selon la revendication 1, caractérisé par le fait que le module de calcul de valeur (B) comporte un redresseur pleine onde (V1, V2).

5. Dispositif de mesure selon la revendication 3, caractérisé par le fait que les éléments additionneurs (S1, S2) comportent des résistances (F1, F2) commandées électriquement.
